# EUROPEAN PATENT APPLICATION

(11) **EP 2 385 651 A2**
(43) Date of publication of application: **09.11.2011**
(21) Application number: 11003747.0
(22) Date of filing: 06.05.2011
(51) Int. Cl.: H04L 5/00

(54) **Method of handling an uplink control channel and related communication device**

(30) Priority: 06.05.2010 US 331840 P
(71) Applicant: HTC Corporation, Taoyuan County 330 (TW)
(72) Inventor: Jen, Yu-Chih, Taoyuan City Taoyuan County 330 (TW)
(74) Representative: Klang, Alexander H.

(57) **Abstract**

A method of handling uplink (UL) control information for a mobile device supporting a carrier aggregation (CA) in a wireless communication system is disclosed. The method comprises receiving a configuration or an activation of the CA with at least one UL component carrier and at least one downlink (DL) component carrier from a network of the wireless communication system, and transmitting the UL control information on at least one control channel region of the at least one UL component carrier; wherein the at least one UL component carrier has a bandwidth configuration sufficient to accommodate the at least one control channel region for transmitting the UL control information.

## Description

### Background of the Invention

### 1. Field of the Invention

The present invention relates to a method used in a wireless communication system and related communication device, and more particularly, to a method of handling an uplink control channel in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

UL control information in the LTE system includes an acknowledgement/negative acknowledgement (ACK/NACK) for downlink (DL) data, a channel quality indicator (CQI), a scheduling request (SR) and multiple-input multiple-output (MIMO) parameters (e.g. a precoding matrix indicator (PMI) and a rank indicator (RI)) of the UE. The UL control information may not be transmitted along with the data in the LTE system, i.e., transmitted by using a dedicated resource. In this situation, the UE transmits the UL control information to the eNB on a physical uplink control channel (PUCCH) in the LTE system. Resource blocks allocated to the PUCCH in a subframe, i.e., a PUCCH region, locate on edges of a system bandwidth for a low out of band (OOB) emission and a low constraint on the UL data scheduling. Besides, the resource blocks hop within slots (intra-subframe hopping) or between slots (inter-subframe hopping) for gaining frequency diversity. Moreover, UL control information of a plurality of UEs can be multiplexed in the PUCCH region by using a base sequence with different cyclic time shifts in a frequency domain, and different orthogonal block spreading codes in a time domain, so as to exploit the PUCCH region efficiently. On the other hand, a sounding reference signal (SRS) and the PUCCH cannot be transmitted in the same subframe in the LTE system. If the SRS and the PUCCH are scheduled to be transmitted in the same subframe, the UE drops the SRS or shortens the PUCCH before the transmission.

On the other hand, the UE may also transmit the UL control information along with data when the dedicated resource is not available. In this situation, the UE first multiplexes the UL control information and the data, and then transmits the multiplexed result to the eNB on a physical uplink shared channel (PUSCH) in the LTE system. Please note that, the UE can only select the one of the PUCCH and the PUSCH to transmit the UL control information but not both so as to maintain a single carrier property. Besides, the CQI is transmitted periodically by the UE when using the PUCCH, but is transmitted aperiodically, i.e., triggered by a request from the eNB, when using the PUSCH.

A long term evolution-advanced (LTE-A) system, as its name implies, is an evolution of the LTE system. The LTE-A system targets faster switching between power states, improves performance at the coverage edge of the eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. An LTE-A specification supports CA for both continuous and non-continuous component carriers with each component carrier limited to a maximum of 110 resource blocks. The CA increases bandwidth flexibility by aggregating the non-continuous component carriers. A component carrier is either used as a UL component carrier or a downlink (DL) component carrier, but not both. Further, there is a one-to-one correspondence between the UL component carrier and the DL component carrier, i.e., each UL component carrier is paired with a corresponding DL component carrier.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resource. The UL and DL primary component carriers are used for establishing and re-establishing the radio resource control (RRC), and transmitting and receiving the system information. The UL or DL primary component carrier can not be de-activated, but can be changed by a handover procedure with the RACH procedure.

The UL MIMO (e.g. UL single user-MIMO, UL SU-MIMO) technique is used to achieve higher data rates, higher spectrum efficiency and improved system capacity by enabling parallel data streams to be exchanged between the eNB and the UE. In general, the UL MIMO technique should be implemented by using multiple transmitting and receiving antennas at both the UE and the eNB. However, even though the eNB can be equipped with the multiple transmitting and receiving antennas, most of the UEs are equipped with only one transmitting antenna and one receiving antenna due to a limited size. The advantage of the UL MIMO technique is thus limited. The UL multiuser MIMO (MU-MIMO) technique is used in the LTE-A system to solve this problem. With the UL MU-MIMO technique, the eNB schedules the UEs each with a transmitting antenna to transmit on the same frequency band by multiplexing data of the UEs. Advantages such as higher data rates, higher spectrum efficiency and improved system capacity can be realized.

Since the UL control channel including both the PUCCH and the PUSCH in the LTE system is designed for the UE and the network with only a single component carrier and without the MIMO, the method cannot be directly applied to the LTE-A system with the CA and the MIMO. In detail, additional UL control information for the CA and the MIMO is needed to be transmitted on the UL control channel, and the UL control channel in the LTE system can not accommodate the additional UL control information without multiplexing the UL control information or extending the UL control channel. Therefore, how to utilize or extended the UL control channel in the LTE system to adapt to the CA and the MIMO is a topic for discussion. Accordingly, parameters and protocols as well as respective signalings related to the PUCCH and the PUSCH in the LTE system must be extended or modified for the LTE-A system.

When carrier aggregation is not well considered in the LTE system, inefficient use of PUCCH rises and there are several problems required to be solved. First, it is known that system bandwidths of 1.4, 3, 5, 10 and 20MHz are normally configured with 1, 2, 4, 8 and 16 PUCCH regions, respectively. However, it is not clear how multiple PUCCH signals are transmitted on multiple PUCCH under carrier aggregation, according to the prior art. Second, for the case of an odd number of PUCCH regions, one resource block (RB) of an RB-pair in each slot is not used for the PUCCH, which wastes uplink resources. Besides, due to the CA, a high rank UL SU-MIMO and a UL MU-MIMO techniques (e.g. especially in a HetNet deployment), it is not clear how interference mitigation is realized for a transmission of reference signal and data. Even though the transmission of reference signal and data on different component carriers do not interfere with each other by using a frequency division multiplexing (FDM), with UEs operating with the high rank UL SU-MIMO or the UL MU-MIMO on the same component carrier or even the same resource blocks, reference signal and data could interfere to its own, respectively.

### Summary of the Invention

The disclosure therefore provides a method and related communication device for handling UL control information and a UL control channel to solve the abovementioned problems.

A method of handling uplink (UL) control information for a mobile device supporting a carrier aggregation (CA) in a wireless communication system is disclosed. The method comprises receiving a configuration or an activation of the CA with at least one UL component carrier and at least one downlink (DL) component carrier from a network of the wireless communication system, and transmitting the UL control information on at least one control channel region of the at least one UL component carrier; wherein the at least one UL component carrier has a bandwidth configuration sufficient to accommodate the at least one control channel region for transmitting the UL control information.

A method of handling an uplink (UL) control channel for a mobile device supporting a carrier aggregation (CA) with at least one downlink (DL) component carrier and at least one UL component carrier in a wireless communication system is disclosed. The method comprises being configured with an odd number of PUCCH regions by a network of the wireless communication system, wherein the last odd-numbered PUCCH region or the most inner PUCCH region relates to two subcarriers of two RB pairs with an unused resource block (RB) of each of the two RB pairs in each slot, obtaining UL control information corresponding to at least one UL transmission on the at least one UL component carrier, or at least one DL signaling or at least one DL transmission on the at least one DL component carrier, wherein a plurality of PUCCH resources or regions are required to accommodate the obtained UL control information, and performing a PUCCH transmission to provide the UL control information on at least one of the unused resource block of each of the two RB pairs and the last odd-numbered PUCCH region or the most inner PUCCH region.

A method of handling uplink (UL) control information transmission, UL data transmission and UL signaling for a mobile device supporting a carrier aggregation (CA) with at least one UL component carrier in a wireless communication system is disclosed. The method comprises receiving at least one component carrier-specific configuration corresponding respectively to the at least one UL component carrier, wherein each of the at least one component carrier-specific configuration comprises at least one of a sequence, a sequence hopping, a sequence group planning, a sequence group hopping, a sequence group shifting, a cyclic time shift and a cyclic time shift hopping, and transmitting at least one of a physical UL control channel (PUCCH), a physical UL shared channel (PUSCH) and a sounding reference signal (SRS) to a network of the wireless communication system on the at least one UL component carrier according to the at least one component carrier-specific configuration.

A method of handling uplink (UL) control information transmission, UL data transmission and UL signaling for a mobile device supporting a multiple-input multiple-output (MIMO) with at least one antenna in a wireless communication system is disclosed. The method comprises receiving at least one antenna-specific configuration corresponding respectively to the at least one antenna, wherein each of the at least one antenna-specific configuration comprises at least one of a orthogonal cover code, a sequence, a sequence hopping, a sequence group planning, a sequence group hopping, a sequence group shifting, a cyclic time shift and a cyclic time shift hopping, and transmitting at least one of a physical UL control channel (PUCCH), a physical UL shared channel (PUSCH) and a sounding reference signal (SRS) to a network of the wireless communication system via the at least one antenna according to the at least one antenna-specific configuration.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of an exemplary wireless communication system according to the present disclosure.

Fig. 2 is a schematic diagram of an exemplary communication device according to the present disclosure.

Fig. 3 is a schematic diagram of communication protocol layers for an exemplary wireless communication system.

Fig. 4 is a flowchart of an exemplary process according to the present disclosure.

Fig. 5 is a flowchart of an exemplary process according to the present disclosure.

Fig. 6 is a flowchart of an exemplary process according to the present disclosure.

Fig. 7 is a flowchart of an exemplary process according to the present disclosure.

### Detailed Description

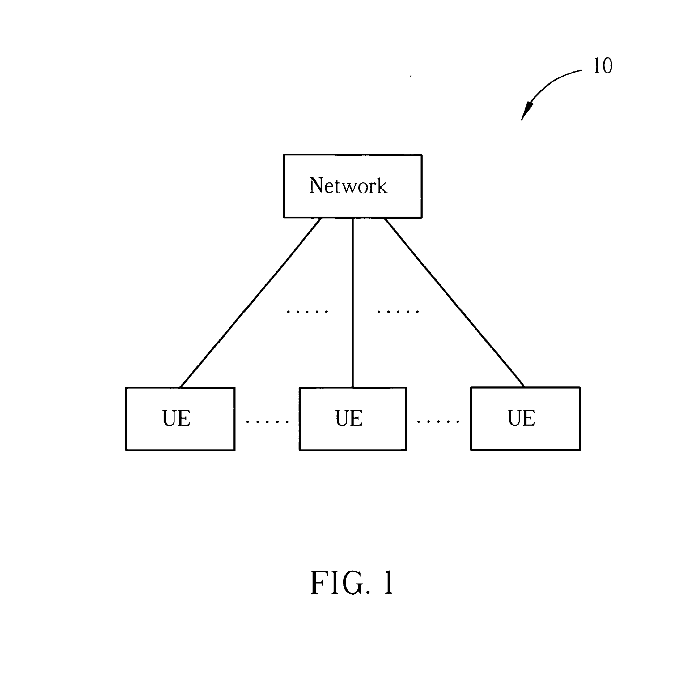

Please refer to Fig. 1, which is a schematic diagram of a wireless communication system 10 according to an example of the present disclosure. The wireless communication system 10, such as a long term evolution-advanced (LTE-A) system or other mobile communication systems supporting a carrier aggregation (CA) or a multiple-input multiple-output (MIMO), is briefly composed of a network and a plurality of user equipments (UEs). In Fig. 1, the network and the UEs are simply utilized for illustrating the structure of the wireless communication system 10. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and the UE can be seen as a transmitter or receiver according to transmission direction, e.g., for an uplink (UL), the UE is the transmitter and the network is the receiver, and for a downlink (DL), the network is the transmitter and the UE is the receiver.

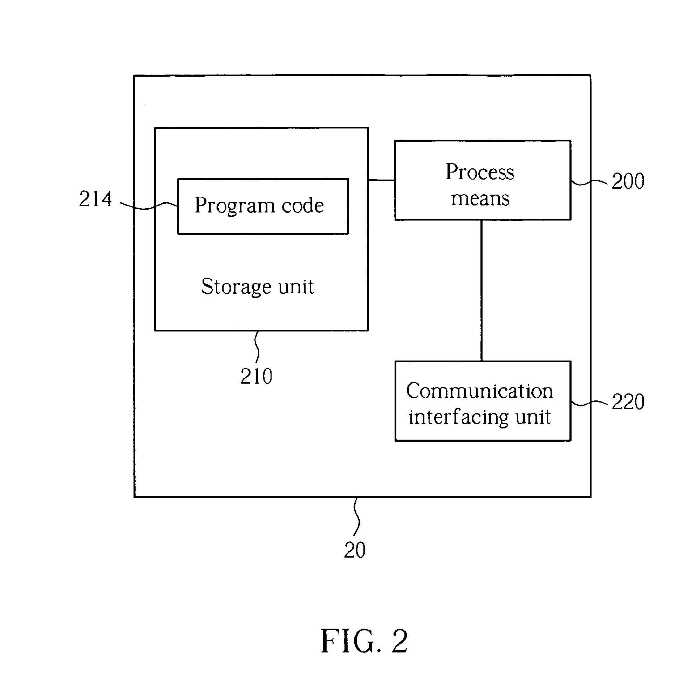

Please refer to Fig. 2, which is a schematic diagram of a communication device 20 according to an example of the present disclosure. The communication device 20 can be the UE or the network shown in Fig. 1, but is not limited herein. The communication device 20 may include a processor 200 such as a microprocessor or Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver and can exchange wireless signals with the network according to processing results of the processor 200.

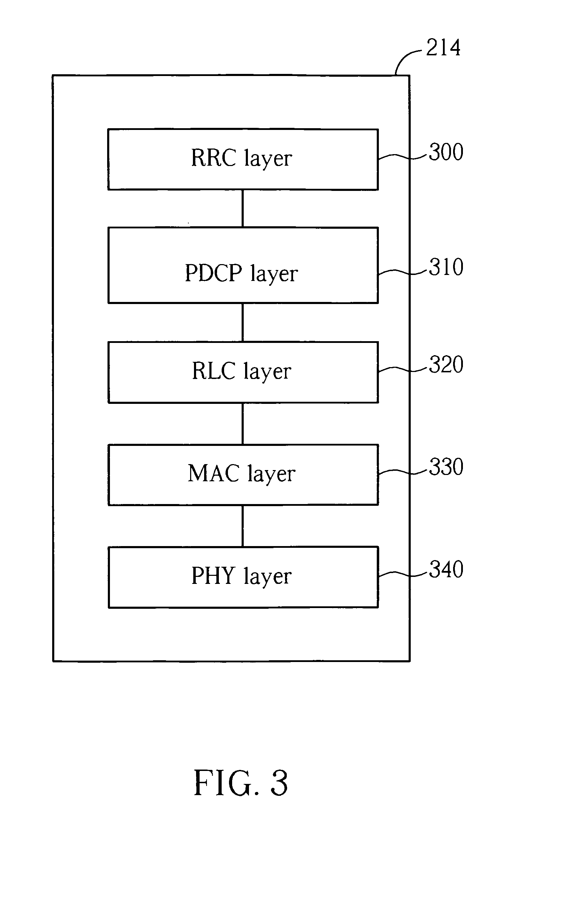

Please refer to Fig. 3, which illustrates a schematic diagram of communication protocol layers for the LTE-Advanced system. The behaviors of some of the protocol layers may be defined in the program code 214 and executed by the processing means 200. The protocol layers from top to bottom are a radio resource control (RRC) layer 300, a packet data convergence protocol (PDCP) layer 310, a radio link control (RLC) layer 320, a medium access control (MAC) layer 330 and a physical (PHY) layer 340. The RRC layer 300 is used for performing broadcast, paging, RRC connection management, measurement reporting and control, and radio bearer control responsible for generating or releasing radio bearers. The PHY layer 340 is used to provide physical channels, e.g. a physical UL control channel (PUCCH) and a physical UL shared channel (PUSCH), such that UL control information and data of different UEs can be transmitted and received with low interferences or even without the interferences. The MAC layer 330 is responsible for a hybrid automatic repeat request (HARQ) process, multiplexing logical channels, a random access channel (RACH) procedure and maintaining a UL timing alignment. In each HARQ process, an acknowledgement (ACK) is reported to the network if the MAC data/control packet is received and decoded successfully. Otherwise, an HARQ negative acknowledgement (NACK) is reported to the network.

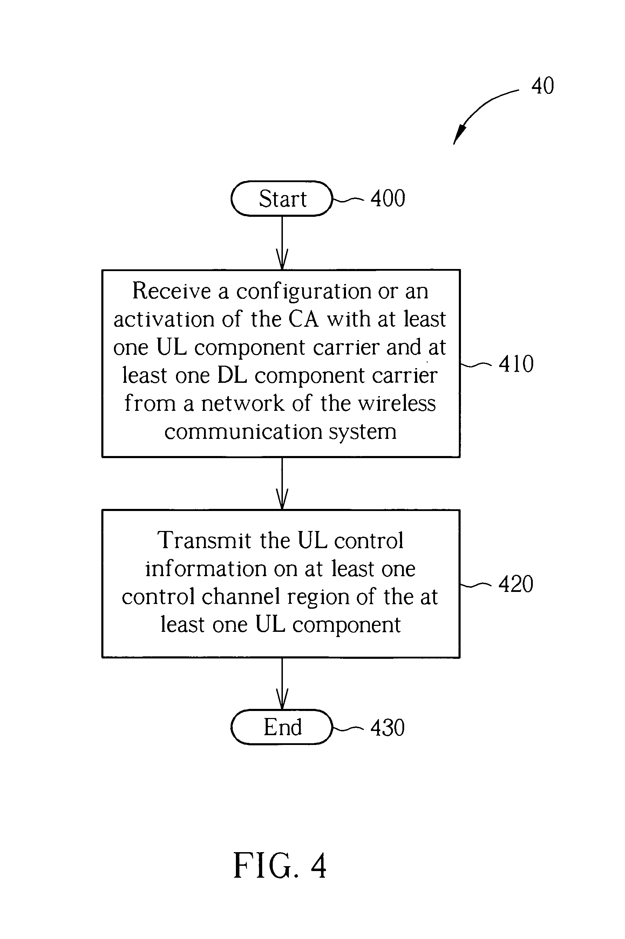

Please refer to Fig. 4, which is a flowchart of a process 40 according to an example of the present disclosure. The process 40 is utilized in a UE of the wireless communication system 10 shown in Fig. 1, to handle UL control information. The process 40 may be compiled into the program code 214 and includes the following steps:

Step 400: Start.

Step 410: Receive a configuration or an activation of the CA with at least one UL component carrier and at least one DL component carrier from a network of the wireless communication system.

Step 420: Transmit the UL control information on at least one control channel region of the at least one UL component carrier.

Step 430: End.

According to the process 40, after the UE receives the configuration or the activation (or the UE is already configured) of the CA with the at least one UL component carrier and the at least one DL component carrier from the network of the wireless communication system, the UE transmits the UL control information on the at least one control channel region of the at least one UL component carrier. Note that, the at least one control channel region which the UE transmits the UL control information on is sufficient to accommodate the UL control information; or, the at least one UL component carrier has bandwidth configuration sufficient to accommodate the at least one control channel region for transmitting the UL control information. Further, the UE may transmit the UL control information on the at least one control channel region of a first UL component carrier of the at least one UL component carrier if an amount of the at least one UL component carrier is greater than one, wherein an amount of the at least one control channel region of the first UL component carrier is the most or sufficient for transmitting the UL control information. According to an amount of the UL control information, an amount of the at least one control channel region may be greater than one. In short, multiple control channel regions of multiple UL component carriers or a control channel region of a component carrier with the largest or sufficient bandwidth is used to transmit a large amount of the UL control information caused by the CA.

On the other hand, availability information of the at least one control channel region for the UE is included in at least one of a cell-specific signaling, a UE-specific signaling and a CA configuration signaling transmitted by the network, such that the UE can choose the at least one control channel region for transmitting the UL control information. Furthermore, the at least one of the cell-specific signaling, the UE-specific signaling and the CA configuration signaling comprises at least one of a control channel region resource index and an amount of the at least one control channel region for each possible control channel format or for part of control channel formats. Accordingly, the UE can transmit the UL control information when the UE needs to response at least one transmission on the at least one DL component carrier, or the UE needs to transmit a scheduling request (SR) for further data transmission on the at least one UL component carrier. To obtain the at least one control channel region, the UE can use the control channel region resource index included in the at least one of the cell-specific signaling, the UE-specific signaling and the CA configuration signaling transmitted by the network. Alternatively, the UE can derive the at least one control channel region by using a configured parameter (e.g. according to a location of a specific PDCCH control channel element (CCE)), wherein if the control channel region resource index is used for the at least one control channel region, the control channel region resource index is explicitly signaled to the UE or is derived by the UE by using a received parameter. Besides, to reduce an amount of the control channel region resource index or to reduce a complexity of transmitting the UL control information, an amount of the at least one control channel region of each of the at least one UL component carrier can be fixed or the same.

In short, according to possible transmission schemes (e.g. a feedback multiplexing or a bundling) for the UL control channel, multiple PUCCH signals on a UL component carrier may require multiple PUCCH regions due to the CA. In such a situation, the network may configure (or the UE may choose) a UL component carrier with a wider component carrier bandwidth (e.g. more PUCCH regions) so that it allows more flexibility to simultaneously accommodate more UL control information (e.g. more feedbacks/reports for more DL component carriers or more scheduling requests) in the PUCCH signals for the CA. Alternatively, the network may be restricted to configure the UL component carrier with at least a certain bandwidth (e.g. for possible concurrent at most 5 PUCCH regions because of 5 DL component carriers and 1 UL component carrier). Or, at least one UL component carrier should have enough PUCCH regions to accommodate all feedbacks/reports for DL component carriers and scheduling requests. Therefore, the UL control information can be transmitted successfully on the at least one UL component carrier according to the above illustration and the process 40, when the UE is configured with the CA.

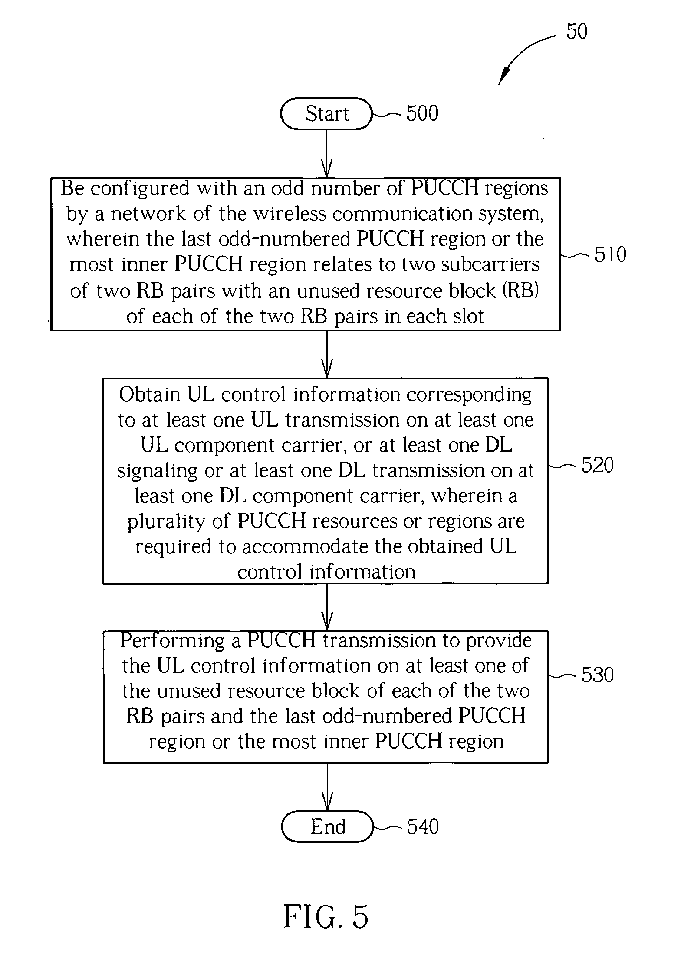

Please refer to Fig. 5, which is a flowchart of a process 50 according to an example of the present disclosure. The process 50 is utilized in a UE of the wireless communication system 10 shown in Fig. 1, to handle a UL control channel. The process 50 may be compiled into the program code 214 and includes the following steps:

Step 500: Start.

Step 510: Be configured with an odd number of PUCCH regions by a network of the wireless communication system, wherein the last odd-numbered PUCCH region or the most inner PUCCH region relates to two subcarriers of two RB pairs with an unused resource block (RB) of each of the two RB pairs in each slot.

Step 520: Obtain UL control information corresponding to at least one UL transmission on at least one UL component carrier, or at least one DL signaling or at least one DL transmission on at least one DL component carrier, wherein a plurality of PUCCH resources or regions are required to accommodate the obtained UL control information.

Step 530: Performing a PUCCH transmission to provide the UL control information on at least one of the unused resource block of each of the two RB pairs and the last odd-numbered PUCCH region or the most inner PUCCH region.

Step 540: End.

According to the process 50, for the UE supporting a CA with the at least one DL component carrier and the at least one DL component carrier in the wireless communication system, the UE is configured with the odd number of PUCCH regions by the network of the wireless communication system, wherein the last odd-numbered PUCCH region or the most inner PUCCH region relates to two subcarriers of two RB pairs with the unused resource block (RB) of the each of the two RB pairs in each slot. Then, the UE obtains the UL control information (e.g. a CQI, a precoding matrix indicator (PMI), the rank indicator (RI), the scheduling request, or an ACK/NACK) corresponding to the at least one UL transmission on the at least one UL component carrier, or the at least one DL signaling or the at least one DL transmission on the at least one DL component carrier, wherein the plurality of PUCCH resources or regions are required to accommodate the obtained UL control information. After that, the UE performs the PUCCH transmission to provide the UL control information on the at least one of the unused resource block of each of the two RB pairs and the last odd-numbered PUCCH region or the most inner PUCCH region. Further, the UE can perform the PUCCH transmission on the unused resource block of each of the two RB-pairs according to a network indication, a dynamic scheduling (e.g. a DL assignment index (DAI) or an acknowledgement resource index (ARI)) or a UE-specific configuration (e.g. a RRC signaling, a broadcast signaling or a UE-dedicated signaling). The unused resource block used for the PUCCH region may be a PUCCH format 1, a PUCCH format 1a, a PUCCH format 1b or a new PUCCH format. In short, resource blocks of a PUCCH region which are not used due to an odd number of resource blocks of the PUCCH region can be exploited for the PUCCH transmission to transmit additional UL control information caused by the CA.

In short, in order to exploit unused resource blocks in each slot in the case of an odd number of PUCCH regions, the eNB may schedule the UE to perform an intra subframe frequency hopping (i.e. a mirror hopping) for PUSCH allocation in the unused Resource blocks. Alternatively, the UE can be assigned a localized allocation which includes unused RB-pair. In this case, the UE will transmit PUSCH data on both resource blocks of the unused RB-pair, assuming that neither of the resource blocks is used for the PUCCH by any UE in the subframe. Thus, the eNB can appropriately schedule the PUSCH transmission (mirror hopping or localized) on the PUCCH resource blocks when they are under-utilized. On the other hand, since an inner PUCCH region of odd number of PUCCH regions is usually reserved for a PUCCH format 1/1a/1b transmission (e.g. an ACK/NACK and/or a scheduling request), the unused RBs should be used (e.g. for PUCCH transmission to provide additional information code point), when multiple PUCCH regions are required for PUCCH transmissions for the CA. Please note that, at least multiple PUCCH transmissions with larger power are allocated away from band edges to limit the interference generated by hopping to other component carriers or other frequency bands. Therefore, the UE can use the UL control channel efficiently on at least one UL component carrier according to the above illustration and the process 50, when the UE is configured with the CA.

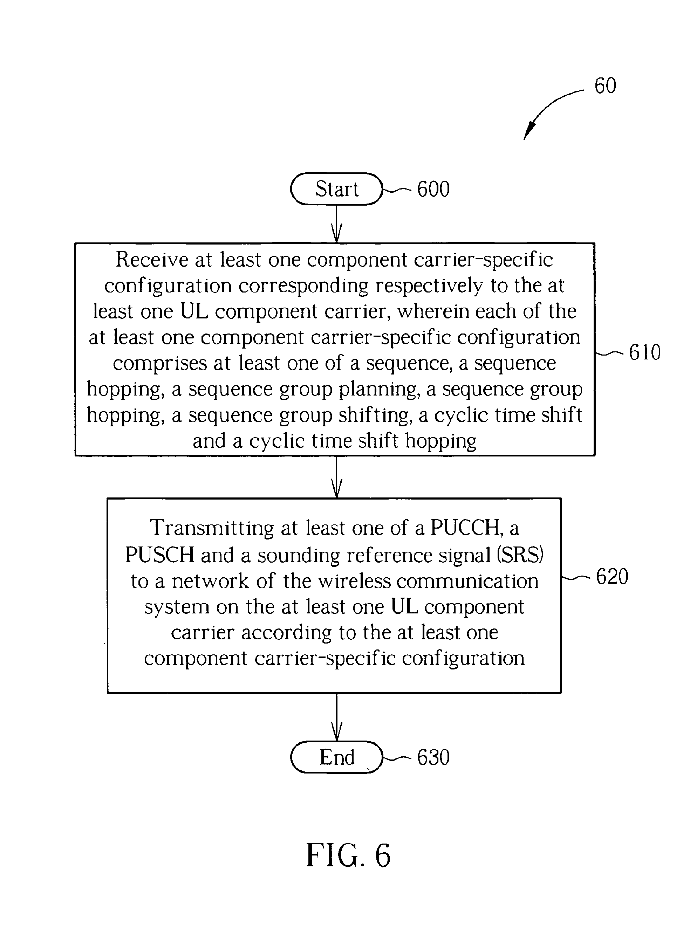

Please refer to Fig. 6, which is a flowchart of a process 60 according to an example of the present disclosure. The process 60 is utilized in a UE of the wireless communication system 10 shown in Fig. 1, to handle UL control information transmission. The process 60 may be compiled into the program code 214 and includes the following steps:

Step 600: Start.

Step 610: Receive at least one component carrier-specific configuration corresponding respectively to the at least one UL component carrier, wherein each of the at least one component carrier-specific configuration comprises at least one of a sequence, a sequence hopping, a sequence group planning, a sequence group hopping, a sequence group shifting, a cyclic time shift and a cyclic time shift hopping.

Step 620: Transmitting at least one of a PUCCH, a PUSCH and a sounding reference signal (SRS) to a network of the wireless communication system on the at least one UL component carrier according to the at least one component carrier-specific configuration.

Step 630: End.

According to the process 60, for the UE supporting a CA with the at least one UL component carrier in the wireless communication system, the UE receives the at least one component carrier-specific configuration corresponding to the at least one UL component carrier, wherein the each of the at least one component carrier-specific configuration comprises at least one of the sequence, the sequence hopping (e.g. for resource allocation size equal to or larger than 6 resource blocks or less than 6 resource blocks with different numbers of base sequence), the sequence group planning (e.g. for each component carrier in a Hetnet deployment, inter/intra cell interference mitigation requirement is different due to various cell deployments with different operating component carriers), the sequence group hopping/shifting (e.g. including a hopping pattern, a shift offset, a sequence group assignment and/or a PUCCH resource index assignment), the cyclic time shift and the cyclic time shift hopping. Then, the UE transmits the at least one of the PUCCH (e.g. a demodulation reference symbol (DM RS), a channel state information reference symbol (CSI RS) and data symbols), the PUSCH (e.g. the DM RS, the CSI RS and data symbols) and the SRS to the network of the wireless communication system on the at least one UL component carrier according to the at least one component carrier-specific configuration. Each of the at least one component carrier-specific configuration can be mutually independent to increase a flexibility of resource allocation for the UL control information, wherein the UE receives the each of the at least one component carrier-specific configuration independently or receives a configuration comprising the each of the at least one component carrier-specific configuration. In short, an orthogonality of each difference resource is exploited to multiplex a large amount of the UL control information such that the large amount of the UL control information caused by the CA can be transmitted efficiently.

For flexibly multiplexing the UL control information corresponding to different component carriers or different UEs, numbers of base sequences and/or base sequence corresponding to the at least one UL component carrier may be different, all the same or partly the same. Alternatively, numbers of cyclic time shifts and/or cyclic time shifts corresponding to the at least one UL component carrier may be different, all the same or partly the same. Besides, each of the at least one component carrier-specific configuration is included in at least one of a cell broadcast signaling and a UE-specific signaling transmitted by the network, and may be derived from a common configuration by using a component carrier offset or a component carrier index. Therefore, the UE can multiplex and transmit the UL control information on at least one UL component carrier according to the above illustration and the process 60, when the UE is configured with the CA.

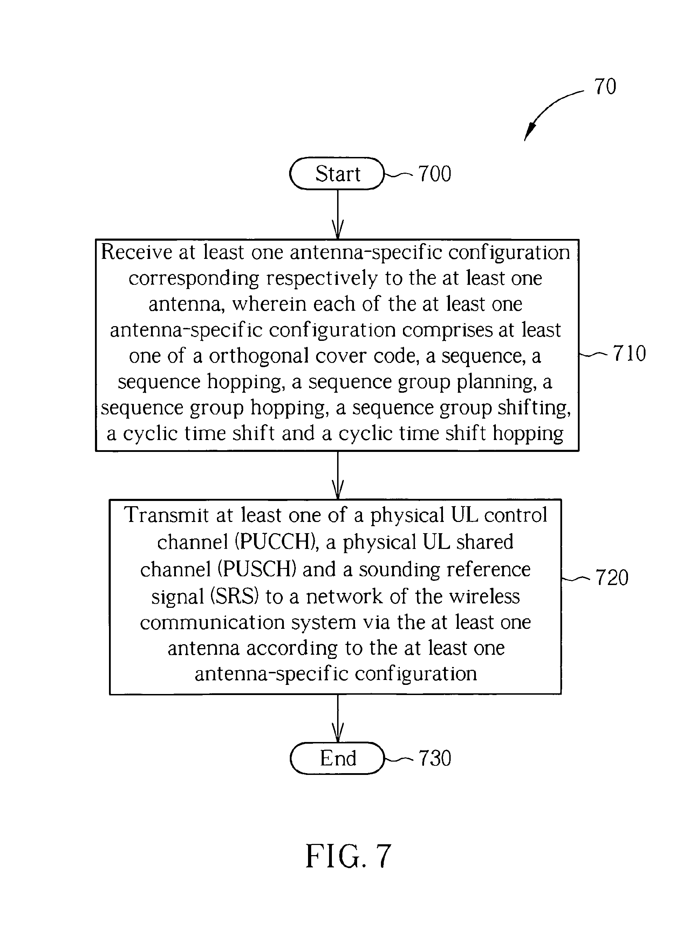

Please refer to Fig. 7, which is a flowchart of a process 70 according to an example of the present disclosure. The process 70 is utilized in a UE of the wireless communication system 10 shown in Fig. 1, to handle UL control information transmission. The process 70 may be compiled into the program code 214 and includes the following steps:

Step 700: Start.

Step 710: Receive at least one antenna-specific configuration corresponding respectively to the at least one antenna, wherein each of the at least one antenna-specific configuration comprises at least one of a orthogonal cover code, a sequence, a sequence hopping, a sequence group planning, a sequence group hopping, a sequence group shifting, a cyclic time shift and a cyclic time shift hopping.

Step 720: Transmit at least one of a physical UL control channel (PUCCH), a physical UL shared channel (PUSCH) and a sounding reference signal (SRS) to a network of the wireless communication system via the at least one antenna according to the at least one antenna-specific configuration.

Step 730: End.

According to the process 70, for the UE supporting a MIMO with the at least one antenna in the wireless communication system, the UE receives the at least one antenna-specific configuration corresponding to the at least one antenna, wherein each of the at least one antenna-specific configuration comprises at least one of the orthogonal cover code (e.g. for spreading), the sequence, the sequence hopping (e.g. for resource allocation size equal to or larger than 6 resource blocks or less than 6 resource blocks with different numbers of base sequence), the sequence group planning, the sequence group hopping/shifting (e.g. including a hopping pattern, a shift offset, a sequence group assignment and/or a PUCCH resource index assignment), the cyclic time shift and the cyclic time shift hopping. Then, the UE transmits the at least one of the PUCCH (e.g. a DM RS, a CSI RS and data symbols), the PUSCH (e.g. the DM RS, CSI RS and data symbols) and the SRS to the network of the wireless communication system via the at least one antenna according to the at least one antenna-specific configuration. According to the UE capability and a deployment of the network, the MIMO can be a single-user MIMO (SU-MIMO) or a multi-user (MU-MIMO). Each of the at least one antenna-specific configuration can be mutually independent increase a flexibility of resource allocation for the UL control information, wherein the UE receives each of the at least one antenna-specific configuration independently or receives a configuration comprising each of the at least one antenna-specific configuration. In short, an orthogonality of each difference resource is exploited to multiplex a large amount of the UL control information such that the large amount of the UL control information caused by the MIMO can be transmitted efficiently.

For multiplexing the UL control information corresponding to the MIMO or different UEs, numbers of base sequences and/or bases sequences corresponding to the at least one antenna may be different, all the same or partly the same. Alternatively, numbers of cyclic time shifts and/or cyclic time shifts corresponding to the at least one antenna may be different, all the same or partly the same. Or, numbers of orthogonal cover codes and/or orthogonal cover codes corresponding to the at least one antenna may be different, all the same or partly the same. Besides, each of the at least one antenna-specific configuration is included in at least one of a cell broadcast signaling and a UE-specific signaling, and may be configured by using an antenna offset or an antenna index. Further, the orthogonal cover code is used when at least one of the sequence hopping and the sequence group hopping is disabled so as to maintain an orthogonality between the UL control information corresponding to different antennas or different UEs. In addition, the UE may perform at least one of the sequence hopping and the sequence group hopping at a subframe level or a slot level. The UE may perform the cyclic time shift hopping at a subframe level or a slot level, or may disable the cyclic time shift hopping. The UE may derive each of the at least one antenna-specific configuration from a common configuration by using an antenna offset or an antenna index.

Please note that, abovementioned illustrations are both applicable to the UE using one or multiple physical antennas and the UE using one or multiple antenna ports (virtual antennas) identified by respective (orthogonal) reference signals, i.e., each term "antenna" is replaced by the term "antenna port".

In short, when different component carriers suffer from different delay spreads, the required number of cyclic time shifts may also be different for interference mitigation among different number of UEs (even for a similar amount of UE) . In addition, bandwidth for each component carrier could vary according to different sizes of allocated resources which also affect possible sequence lengths and possible cyclic time shifts necessary. Therefore, the UE can multiplex and transmit the UL control information via the at least one antenna without interference to its own according to the above illustration and the process 70, when the UE is configured with the MIMO.

Besides, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

In conclusion, a UE in the LTE system can only perform the transmissions and receptions on a UL component carrier and a DL component carrier, respectively. Therefore, resources of UL control channels are sufficient for a UL control information transmission regarding feedbacks to the receptions on the DL component carrier or other control information. However, the UE in the LTE-A system can perform the transmissions and the receptions on multiple UL component carriers and multiple DL component carriers, respectively. The resources of the UL control channels are not sufficient for the UL control information transmission due to a large amount of the feedbacks to the receptions on the multiple DL component carriers and the other control information. On the other hand, the UE causes interference to its own when using a high rank UL SU-MIMO or a UL MU-MIMO on the same component carrier or the same resource blocks. Therefore, additional resources must be used for the increased UL control information or the UL control information must be multiplexed for an efficient use of limited resources. The exemplary method and means are provided accordingly to enhance the UL control information transmission for the UE in the LTE system to operate in the wireless communication system (e.g. the LTE-A system) with the CA or the MIMO.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling uplink (UL) control information for a mobile device supporting a carrier aggregation (CA) in a wireless communication system, the method comprising:
receiving a configuration or an activation of the CA with at least one UL component carrier and at least one downlink (DL) component carrier from a network of the wireless communication system; and
transmitting the UL control information on at least one control channel region of the at least one UL component carrier;
wherein the at least one UL component carrier has a bandwidth configuration sufficient to accommodate the at least one control channel region for transmitting the UL control information.

2. The method of claim 1, wherein transmitting the UL control information on the at least one control channel region of the at least one UL component carrier comprises:
transmitting the UL control information on at least one control channel region of a first UL component carrier of the at least one UL component carrier if an amount of the at least one UL component carrier is greater than one, wherein an amount of the at least one control channel region of the first UL component carrier is the most or sufficient for transmitting the UL control information.

3. The method of claim 1, wherein an amount of the at least one control channel region is greater than one, and availability information of the at least one control channel region for the mobile device is comprised in at least one of a cell-specific signaling, a mobile device-specific signaling and a CA configuration signaling.

4. The method of claim 3, wherein the at least one of the cell-specific signaling, the mobile device-specific signaling and the CA configuration signaling comprises at least one of a control channel region resource index and an amount of the at least one control channel region for each possible control channel format or for part of control channel formats.

5. The method of claim 1, wherein the UL control information relates to at least one transmission on the at least one DL component carrier or relates to a scheduling request.

6. The method of claim 1, wherein the at least one control channel region is explicitly signaled to the mobile device, or is indicated by using a control channel region resource index, or is implicitly derived by the mobile device by using a configured parameter; and when the control channel region resource index is used for the at least one control channel region, the control channel region resource index is explicitly signaled to the mobile device or is derived by the mobile device by using a received parameter, and an amount of the at least one control channel region of each of the at least one uplink component carrier is fixed or the same.

7. A method of handling an uplink (UL) control channel for a mobile device supporting a carrier aggregation (CA) with at least one downlink (DL) component carrier and at least one UL component carrier in a wireless communication system, the method comprising:
being configured with an odd number of PUCCH regions by a network of the wireless communication system, wherein the last odd-numbered PUCCH region or the most inner PUCCH region relates to two subcarriers of two RB pairs with an unused resource block (RB) of each of the two RB pairs in each slot;
obtaining UL control information corresponding to at least one UL transmission on the at least one UL component carrier, or at least one DL signaling or at least one DL transmission on the at least one DL component carrier, wherein a plurality of PUCCH resources or regions are required to accommodate the obtained UL control information; and
performing a PUCCH transmission to provide the UL control information on at least one of the unused resource block of each of the two RB pairs and the last odd-numbered PUCCH region or the most inner PUCCH region.

8. The method of claim 7 further comprising performing the PUCCH transmission on the unused resource block of each of the two RB pairs according to a network indication, a dynamic scheduling, or a mobile device-specific configuration.

9. The method of claim 7, wherein the unused resource block is used for the PUCCH region of a PUCCH format 1, a PUCCH format 1a, a PUCCH format 1b or a new PUCCH format.

10. A method of handling uplink (UL) control information transmission, UL data transmission and UL signaling for a mobile device supporting a carrier aggregation (CA) with at least one UL component carrier in a wireless communication system, the method comprising:
receiving at least one component carrier-specific configuration corresponding respectively to the at least one UL component carrier, wherein each of the at least one component carrier-specific configuration comprises at least one of a sequence, a sequence hopping, a sequence group planning, a sequence group hopping, a sequence group shifting, a cyclic time shift and a cyclic time shift hopping; and
transmitting at least one of a physical UL control channel (PUCCH), a physical UL shared channel (PUSCH) and a sounding reference signal (SRS) to a network of the wireless communication system on the at least one UL component carrier according to the at least one component carrier-specific configuration.

11. The method of claim 10, wherein each of the at least one component carrier-specific configuration is mutually independent, wherein the mobile device receives each of the at least one component carrier-specific configuration independently or receives a configuration comprising each of the at least one component carrier-specific configuration.

12. The method of claim 10, wherein numbers of base sequences corresponding to the at least one UL component carrier are different, all the same or partly the same; the bases sequences corresponding to the at least one UL component carrier are different, all the same or partly the same; or both the numbers of the base sequences and the bases sequences corresponding to the at least one UL component carrier are different, all the same or partly the same; and/or numbers of cyclic time shifts corresponding to the at least one UL component carrier are different, all the same or partly the same; or the cyclic time shifts corresponding to the at least one UL component carrier are different, all the same or partly the same; or both the numbers of the cyclic time shifts and the cyclic time shifts corresponding to the at least one UL component carrier are different, all the same or partly the same.

13. The method of claim 10, wherein each of the at least one component carrier-specific configuration is comprised in at least one of a cell broadcast signaling and a mobile device-specific signaling; and/or each of the at least one component carrier-specific configuration is derived from a common configuration by using a component carrier offset or a component carrier index.

14. A method of handling uplink (UL) control information transmission, UL data transmission and UL signaling for a mobile device supporting a multiple-input multiple-output (MIMO) with at least one antenna in a wireless communication system, the method comprising:
receiving at least one antenna-specific configuration corresponding respectively to the at least one antenna, wherein each of the at least one antenna-specific configuration comprises at least one of a orthogonal cover code, a sequence, a sequence hopping, a sequence group planning, a sequence group hopping, a sequence group shifting, a cyclic time shift and a cyclic time shift hopping; and
transmitting at least one of a physical UL control channel (PUCCH), a physical UL shared channel (PUSCH) and a sounding reference signal (SRS) to a network of the wireless communication system via the at least one antenna according to the at least one antenna-specific configuration.

15. The method of claim 14, wherein the MIMO is a single-user MIMO (SU-MIMO) or a multi-user MIMO (MU-MIMO) and the antenna refers to a physical antenna or an antenna port identified by reference signal.

16. The method of claim 14, wherein each of the at least one antenna-specific configuration is mutually independent, wherein the mobile device receives each of the at least one antenna-specific configuration independently or receives a configuration comprising each of the at least one antenna-specific configuration.

17. The method of claim 14, wherein numbers of base sequences corresponding to the at least one antenna are different, all the same or partly the same; the bases sequences corresponding to the at least one antenna are different, all the same or partly the same; or both the numbers of base sequences and the bases sequences corresponding to the at least one antenna are different, all the same or partly the same.

18. The method of claim 14, wherein numbers of cyclic time shifts corresponding to the at least one antenna are different, all the same or partly the same; cyclic time shifts corresponding to the at least one antenna are different, all the same or partly the same; or both the numbers of cyclic time shifts and the cyclic time shifts corresponding to the at least one antenna are different, all the same or partly the same; and/or
numbers of orthogonal cover codes corresponding to the at least one antenna are different, all the same or partly the same; the orthogonal cover codes corresponding to the at least one antenna are different, all the same or partly the same; or both the numbers of orthogonal cover codes and the orthogonal cover codes corresponding to the at least one antenna are different, all the same or partly the same.

19. The method of claim 14, wherein each of the at least one antenna-specific configuration is comprised in at least one of a cell broadcast signaling and a mobile device-specific signaling; and/or
each of the at least one antenna-specific configuration is derived from a common configuration by using an antenna offset or an antenna index.

20. The method of claim 14, wherein the orthogonal cover code is used when at least one of the sequence hopping and the sequence group hopping is disabled.

21. The method of claim 14, wherein at least one of the sequence hopping and the sequence group hopping is performed at a subframe level or a slot level; and/or the cyclic time shift hopping is performed at a subframe level or a slot level, or is disabled.

22. A communication device of a wireless communication system for performing the method of any one of the preceding claims, for handling uplink control information.
